# EUROPÄISCHE PATENTSCHRIFT

(11) **EP 3 247 661 B1**
(45) Veröffentlichungstag und Bekanntmachung des Hinweises auf die Patenterteilung: **13.04.2022**
(21) Anmeldenummer: 16700586.7
(22) Anmeldetag: 14.01.2016
(51) Int. Cl.: B65G 67/50

(54) **KIPPVORRICHTUNG SOWIE VERFAHREN ZUM BETREIBEN EINER KIPPVORRICHTUNG**
TILTING DEVICE AND METHOD FOR OPERATING A TILTING DEVICE
DISPOSITIF DE BASCULEMENT AINSI QUE PROCÉDÉ PERMETTANT DE FAIRE FONCTIONNER UN DISPOSITIF DE BASCULEMENT

(30) Priorität: 23.01.2015 DE 102015000667
(43) Veröffentlichungstag der Anmeldung: 29.11.2017
(73) Patentinhaber: thyssenkrupp Industrial Solutions AG, 45143 Essen (DE); thyssenkrupp AG, 45143 Essen (DE)
(72) Erfinder: SEVERIN, Frank, 66440 Blieskastel (DE); ROTH, Frank, 66271 Kleinblittersdorf (DE)
(74) Vertreter: thyssenkrupp Intellectual Property GmbH
(86) Internationale Anmeldenummer: PCT/EP2016/050598
(87) Internationale Veröffentlichungsnummer: WO 2016/116339

(56) Entgegenhaltungen:
- DE-B3-102006 044 976
- DE-B3-102008 047 716
- GB-A- 1 564 205
- US-A- 3 719 292
- US-A- 3 811 580
- US-A- 4 685 851

## Beschreibung

Die Erfindung betrifft eine Kippvorrichtung zum Entleeren von Materialien, vorzugsweise Schüttgut, aus oben offenen Waggons, sowie ein Verfahren zum Betreiben einer Kippvorrichtung.

### Stand der Technik

Kippvorrichtungen werden üblicherweise zum Entleeren von mit Schüttgut beladenen Wagons, insbesondere Zugwagons, eingesetzt. In der DE 10 2008 047 716 werden die Wagon zum Entleeren in der Kippvorrichtung verklemmt und um eine Drehachse um etwa 130° - 180° gedreht, sodass der Wagoninhalt beispielsweise in einen Bunker geschüttet wird. Der Wagon weist üblicherweise ein Fahrwerk mit einer Wagonfeder auf und steht während des Kippvorgangs auf einer Plattform der Kippvorrichtung. US 3 811 580 A offenbart außerdem eine Kippvorrichtung gemäß dem Oberbegriff des Anspruchs 1.

Nach der Entleerung des Wagons wird dieser um die Drehachse in die Ausgangsposition gedreht, wobei der Wagon ein um das Gewicht des Wagoninhalts reduziertes Gewicht aufweist. Die Gewichtsdifferenz sorgt für eine über die Wagonfeder aufgebrachte Verspannung der Kippvorrichtung, was insbesondere in einem hohen Verschleiß oder einem Bruch von Komponenten der Kippvorrichtung resultiert.

### Offenbarung der Erfindung

Davon ausgehend ist es Aufgabe der vorliegenden Erfindung, eine Kippvorrichtung sowie ein Verfahren zum Betreiben einer Kippvorrichtung bereitzustellen, wobei Verspannungen innerhalb der Kippvorrichtung zuverlässig minimiert werden.

Diese Aufgabe wird durch eine Kippvorrichtung mit den Merkmalen des unabhängigen Vorrichtungsanspruchs 1 gelöst. Vorteilhafte Weiterbildungen ergeben sich aus den abhängigen Ansprüchen.

Eine Kippvorrichtung zum Entleeren von Materialien, vorzugsweise Schüttgut, aus insbesondere oben offenen Waggons umfasst nach einem ersten Aspekt einen Kipprahmen, der um eine Drehachse drehbar ist, eine mit dem Kipprahmen verbundene Plattform zur Aufnahme zumindest eines Waggons, einen an dem Kipprahmen drehbar angebrachten Klemmarm, eine Verriegelungseinrichtung zum Verhindern einer relativen Bewegung zwischen dem Kipprahmen und dem Klemmarm und einen Bügel, der derart an dem Klemmarm angebracht ist, dass er in einer Kippposition der Kippvorrichtung, bei welcher der Kipprahmen um die Drehachse gedreht ist, zumindest teilweise auf einer oberen Kante zumindest einer Seitenwand des Waggons anliegt, wobei an dem Bügel ein Hydraulikzylinder derart angebracht ist, dass er während eines Kippvorgangs auftretende Verspannungen der Kippvorrichtung, insbesondere in der Verriegelungseinrichtung, zumindest teilweise kompensiert.

Bei der Kippvorrichtung handelt es sich vorzugsweise um einen Seitenkipper, wobei die Drehachse des Kipprahmens die Wagonmittelachse ist oder einen Seitenhochkipper, bei dem die Drehachse des Kipprahmens oberhalb der Mittelachse eines sich in der Kippvorrichtung befindenden Wagons liegt. Das Schüttgut umfasst beispielsweise Rohstoffe, wie Kohle oder Erze. Bei dem Wagon handelt es sich beispielsweise um einen Wagon eines Güterzugs, der oben offen oder zumindest zu öffnen ist, sodass sich in dem Wagon befindendes Schüttgut durch Drehen des Wagons ausgekippt werden kann. Der Wagon weist vorzugsweise ein Fahrwerk mit Wagonfedern auf.

Die Kippvorrichtung ist vorzugsweise von einer Ausgangsposition, in der die Oberfläche der Plattform im Wesentlichen horizontal ausgerichtet ist, sodass ein Verfahren des Wagons in die Kippvorrichtung hinein oder aus der Kippvorrichtung heraus möglich ist, in eine Kippposition bewegbar, in der der Kipprahmen um einen Drehwinkel um die Drehachse gedreht ist. Unter der Kippposition ist jede Position zu verstehen, bei welcher der Kipprahmen um die Drehachse relativ zur Ausgangsposition gedreht ist. Unter einer Drehung in Kipprichtung ist eine Drehung von der Ausgangsposition in die Endposition des Kippvorgangs, in der der Kipprahmen etwa 130°- 180° gedreht ist, zu verstehen.

Der Kipprahmen umfasst vorzugsweise einen Antriebsring, der im Wesentlichen halbkreisförmig ausgebildet ist und ein Zahnprofil aufweist. Der Antriebsring steht mit einer Antriebseinrichtung im Eingriff, sodass sich bei einem Antrieb der Kippvorrichtung der Kipprahmen um die Drehachse dreht und der Antriebsring eine im Wesentlichen kreisförmige Bewegung ausführt. Der Durchmesser des im Wesentlichen halbkreisförmigen Kipprahmens übersteigt die Höhe des Wagons, sodass dieser durch eine Drehbewegung auskippbar ist.

Auf der Oberfläche der Plattform sind vorzugsweise Schienen angebracht, auf denen der Wagon in die Kippvorrichtung führbar ist. Die Plattform ist drehfest direkt oder über einen Verbindungsarm an dem Kipprahmen angebracht, sodass die Plattform die Drehbewegung des Kipprahmens ausführt.

Der Klemmarm erstreckt sich in Richtung der Drehachse des Kipprahmens über zumindest eine Wagonlänge, sodass zumindest ein Wagon, vorzugsweise zwei Wagons, in der Kippvorrichtung aufnehmbar sind. Die drehbare Anbringung des Klemmarms an dem Kipprahmen ermöglicht eine relative Bewegung des Kipprahmens zu dem Klemmarm. Der obere Bereich des Klemmarms erstreckt sich in einem Winkel zu dem unteren Bereich des Klemmarms, sodass sich bei einer Drehung des Kipprahmens in Kipprichtung der obere Bereich des Klemmarms und die Plattform aufeinander zu bewegen, sodass der Wagon zwischen dem Kipprahmen und dem Klemmarm fixierbar ist. Ferner weist der Klemmrahmen vorzugsweise ein Gegengewicht auf, das derart an dem Klemmarm angebracht ist, dass es für eine vertikale Ausrichtung des unteren Bereichs des Klemmarms in der Ausgangsposition sorgt.

Der insbesondere an dem oberen Bereich des Klemmarms, zwischen Klemmarm und Plattform angebrachten Bügel kommt bei einer Drehung des Klemmarms in Kipprichtung auf der oberen Kante der Seitenwände des Wagons zum Anliegen. Der Bügel ist vorzugsweise bewegbar, insbesondere drehbar, an dem Klemmarm angebracht, sodass er für eine optimale Fixierung von Wagons unterschiedlicher Höhe und Breite in der Kippeinrichtung sorgt.

Die Verriegelungseinrichtung verhindert in einer Verriegelungsposition eine relative Bewegung des Kipprahmens und des Klemmarms. Bei einer solchen Verriegelungseinrichtung handelt es sich beispielsweise um einen Bolzen oder eine Einrastverriegelung, die beispielsweise derart ausgebildet ist, dass sie eine relative Bewegung des Klemmarms und des Kipprahmens in einer Richtung, insbesondere entgegen der Kipprichtung, verhindert.

Bei einem Kippvorgang wird der Kipprahmen in Kipprichtung gedreht, sodass sich der Raum zwischen dem Bügel und der Plattform verringert bis der Wagon zwischen diesen geklemmt wird. Der Klemmrahmen wird um die Drehachse in die Endposition gedreht, wobei der Wagon entleert wird. Anschließend wird der Kipprahmen entgegen der Kipprichtung in die Ausgangsposition gedreht. Im entladenen Zustand ist das Gewicht des Wagons geringer, sodass die Wagonfedern den Bügel mit einer Kraft beaufschlagt und Verspannungen innerhalb der Kippvorrichtung, insbesondere in der Verriegelungseinrichtung, verursacht.

Der an dem Bügel angebrachte Hydraulikzylinder ermöglicht einen Ausgleich der über die Wagonfeder auf den Bügel aufgebrachten Kräfte, sodass Verspannungen innerhalb der Kippvorrichtung nach dem Entleeren des Wagons und während des Drehens entgegen der Kipprichtung in die Ausgangsposition zuverlässig vermieden werden. Durch den Hydraulikzylinder werden die durch die Gewichtsdifferenz des Wagons vor und nach dem Kippvorgang auftretenden Wagonfederkräfte gezielt kompensiert, unabhängig von dem Gewicht des Wagoninhalts. Ein Verschleiß oder das Risiko eines Bruchs der Verriegelungseinrichtung wird minimiert.

Die Anordnung des Hydraulikzylinders an dem Bügel ermöglicht eine einfache Installation des Hydraulikzylinders, der zur Kompensation der Wagonkraft ausgebildet ist.

Erfindungsgemäß ist der Hydraulikzylinder zwischen dem Bügel und dem Klemmarm angeordnet. Dies ermöglicht einen Ausgleich der zwischen dem Bügel und dem Klemmarm wirkenden Kräfte, die über die Wagonfedern in den Bügel eingeleitet werden. Der Hydraulikzylinder ist vorzugsweise mit seinem einen Ende an dem Klemmarm und mit seinem anderen Ende an dem Bügel angebracht.

Der Bügel weist gemäß einer weiteren Ausführungsform einen ersten Bügelarm und einen relativ zu dem ersten Bügelarm drehbaren zweiten Bügelarm auf, wobei der Hydraulikzylinder zwischen dem ersten Bügelarm und dem zweiten Bügelarm angeordnet ist. Dies ermöglicht eine Kompensation der Wagonfederkräfte über eine relative Bewegung der Bügelarme zueinander.

Der Hydraulikzylinder ist gemäß einer weiteren Ausführungsform derart an dem Bügel angebracht, dass er den Bügel in der Kippposition der Kippvorrichtung mit einer Kraft in Richtung der Plattform beaufschlagt.

Gemäß einer weiteren Ausführungsform ist ein hydraulischer Druckspeicher angeordnet, der mit dem Hydraulikzylinder in Verbindung steht. Ein hydraulischer Druckspeicher ermöglicht eine passive Regelung des Hydraulikzylinders und realisiert eine einfache und kostengünstige Installation des Hydraulikzylinders in der Kippvorrichtung.

Zwischen dem Hydraulikzylinder und dem Druckspeicher ist gemäß einer weiteren Ausführungsform ein Ventil, insbesondere ein Magnetstellventil, angeordnet. Das Magnetstellventil ist vorzugsweise elektrisch ansteuerbar.

Gemäß einer weiteren Ausführungsform umfasst das Ventil eine geöffnete Position, in der Hydraulikflüssigkeit von dem Hydraulikzylinder in den Druckspeicher strömen kann und eine geschlossene Position, in der ein Rückschlagventil ein Strömen von Hydraulikflüssigkeit von dem Hydraulikzylinder in den Druckspeicher verhindert. Dies ermöglicht eine einfache Regelung des Drucks in dem Hydraulikzylinder.

Der Waggon weist gemäß einer weiteren Ausführungsform ein Fahrgestell und eine Wagonfeder auf, wobei der Hydraulikzylinder derart angeordnet ist, dass er der Wagonfeder entgegenwirkt. Dies ermöglicht einen optimalen Ausgleich der von der Wagonfeder auf die Kippvorrichtung aufgebrachten Kräfte.

Weiterhin umfasst die Erfindung ein Verfahren zum Betreiben einer voran beschriebenen Kippvorrichtung, wobei die Kippvorrichtung einen hydraulischen Druckspeicher aufweist ist, der mit dem Hydraulikzylinder in Verbindung steht. Das Verfahren umfassend die Schritte:
a) Drehen des Kipprahmens in Kipprichtung um die Drehachse D,
b) Aktivieren der Verriegelungseinrichtung, sodass eine relative Bewegung zwischen dem Kipprahmen und dem Klemmarm verhindert wird,
c) Drehen des Kipprahmens in Kipprichtung um die Drehachse D um einen Winkel von etwa 130° - 180°,
d) Drehen des Kipprahmens entgegen der Kipprichtung um die Drehachse D,
e) Strömen von Hydraulikflüssigkeit von dem Hydraulikzylinder in den Druckspeicher,
f) Lösen der Verriegelungseinrichtung, sodass eine relative Bewegung zwischen dem Kipprahmen und dem Klemmarm ermöglicht wird.

Der Schritt e) ermöglicht einen Druckausgleich der durch die Gewichtsdifferenz des Wagons zusätzlich auf den Hydraulikzylinder wirkenden Kraft der Wagonfeder, wobei eine Verspannung der arretierten Verriegelungseinrichtung verhindert wird.

Die Kippvorrichtung weist gemäß einer weiteren Ausführungsform ein Ventil auf, das eine geöffnete Position, in der Hydraulikflüssigkeit von dem Hydraulikzylinder in den Druckspeicher strömen kann, und eine geschlossene Position umfasst, in der ein Rückschlagventil ein Strömen von Hydraulikflüssigkeit von dem Hydraulikzylinder in den Druckspeicher verhindert und wobei der Schritt e) das Bewegen des Ventils in die geöffnete Position umfasst. Dadurch wird ein Strom von Hydraulikflüssigkeit von dem Hydraulikzylinder zu dem Druckspeicher und somit ein Druckausgleich zwischen dem Hydraulikzylinder und dem Druckspeicher ermöglicht.

Zwischen den Schritten e) und f) wird gemäß einer weiteren Ausführungsform das Ventil in die geschlossene Position bewegt wird. Dadurch wird ein konstanter Druck in dem Hydraulikzylinder vor dem Öffnen der Verriegelungseinrichtung erreicht.

Die voran beschriebene Kippvorrichtung und das Verfahren zum Betreiben einer Kippvorrichtung ermöglichen einen Druckausgleich innerhalb der Kippvorrichtung während des Kippvorgangs, wodurch Verspannungen in der Kippvorrichtung und insbesondere in der Verriegelungseinrichtung zuverlässig vermieden werden.

### Bevorzugte Ausführungsbeispiele der Erfindung

Die Erfindung ist nachfolgend anhand mehrerer Ausführungsbeispiele mit Bezug auf die beiliegenden Figuren näher erläutert.
- Fig. 1: zeigt eine schematische Darstellung einer Kippvorrichtung mit einem Wagon in der Ausgangsposition gemäß einem Ausführungsbeispiel.
- Fig. 2: zeigt eine schematische Darstellung einer Kippvorrichtung mit einem Wagon gemäß dem Ausführungsbeispiel in Fig.1 in einer Kippposition.
- Fig. 3: zeigt eine schematische Darstellung einer Kippvorrichtung mit einem Wagon gemäß dem Ausführungsbeispiel in Fig.1 in einer weiteren Kippposition.
- Fig. 4: zeigt eine vergrößerte Darstellung eines Ausschnitts einer Kippvorrichtung aus Fig. 2.
- Fig. 5: zeigt eine schematische Darstellung einer Hydraulikschaltung des Hydraulikzylinders der Fig. 1 - 4.

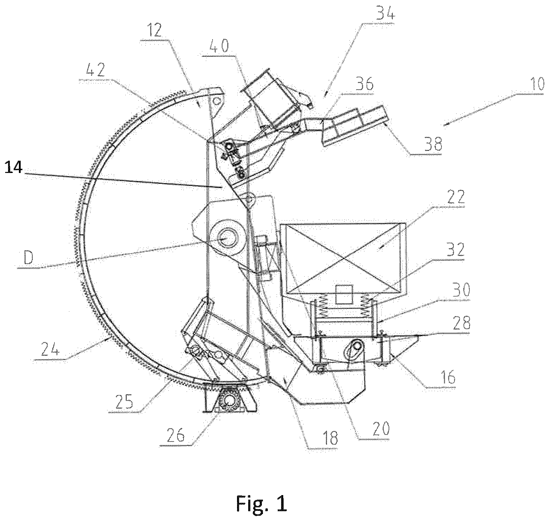

Fig. 1 zeigt eine Kippvorrichtung 10, in der sich ein Wagon 22 befindet. Die Kippvorrichtung 10 weist einen Kipprahmen 12 auf, der in etwa halbkreisförmig ausgebildet ist. Der Kipprahmen 12 weist einen Antriebsring mit einer Verzahnung auf, die sich über den halbkreisförmig ausgebildeten Umfangsbereich erstreckt und mit einer bodenseitig angeordneten Antriebseinrichtung 26 zusammenwirkt. Ferner weist die Kippvorrichtung 10 einen Klemmarm 14 auf der mit dem Kipprahmen 12 um eine Drehachse D drehbar verbunden ist. Die Drehachse D ist in etwa in dem Kreismittelpunkt des Halbkreisförmigen Kipprahmens 12 angeordnet. Der Klemmarm 14 weist einen ersten sich in der in Fig. 1 dargestellten Ausgangsposition in etwa senkrecht erstreckenden Bereich auf, der einen im wesentlichen rechteckigen Querschnitt aufweist, wobei in etwa durch den Mittelpunkt dieses Bereichs die Drehachse D verläuft. An das obere Ende des ersten Bereichs schließt sich ein zweiter Bereich an, der sich in etwa 45° zu dem ersten Bereich erstreckt und einen im Wesentlichen Rechteckigen Querschnitt aufweist. Der Klemmarm 14 erstreckt sich ferner in Richtung der Drehachse D, sodass er beispielsweise zwei Wagonlängen aufweist. Am unteren Ende des ersten Bereichs des Klemmarms 14 ist ein Gegengewicht 18 angebracht, das einen im Wesentlichen rechteckigen Querschnitt aufweist und sich in etwa in einem 45° Winkel zu dem ersten Bereich des Klemmarms 14 erstreckt.

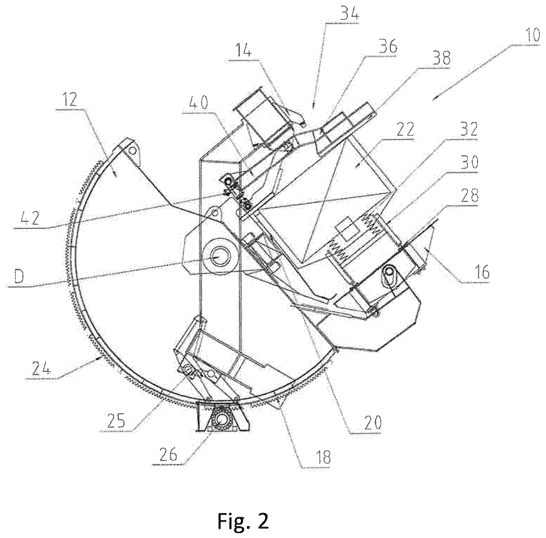

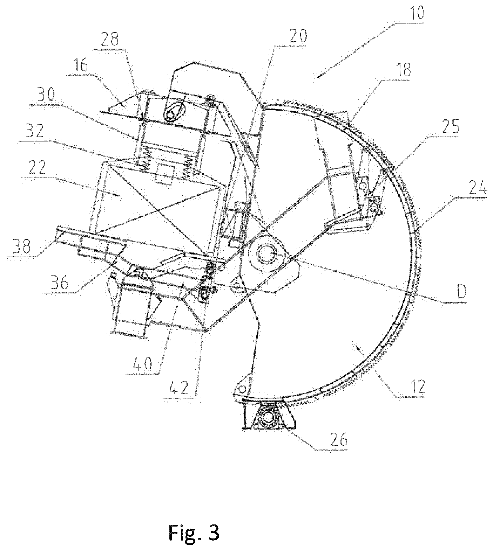

Die Kippvorrichtung 10 weist ferner eine Plattform 16 zur Aufnahme zumindest eines Wagons auf. Die Plattform ist mit dem Kipprahmen 12 drehfest verbunden und weist eine in der Ausgangsposition in Fig. 1 horizontal verlaufende Oberfläche auf, an der zwei Schienen 28 zur Führung eines Wagons 22 angebracht sind. Des Weiteren weist die Kippvorrichtung 10 eine sich in Richtung der Drehachse D erstreckende und an der Innenseite des Kipprahmens 12 angeordnete Stützwand 20 auf, an der zumindest ein Wagon 22 in einer Kippposition gemäß Fig. 2 und 3 anliegt.

Auf der Plattform 16 ist ein Wagon 22 angeordnet, an dem ein auf den Schienen 28 positioniertes Fahrwerk 30 mit zwei schematisch dargestellten Wagonfedern 32 angebracht ist, die den Wagon 22 abstützen. Der Wagon ist beispielsweise mit Schüttgut beladen.

An dem äußeren Endbereich des zweiten Bereichs des Klemmarms 14 ist oberhalb des Wagons 22 ein Bügel 34 angebracht, der sich über den zweiten Bereich des Klemmarms 14 hinweg erstreckt. Der Bügel 34 umfasst einen ersten Bügelarm 36 und einen zweiten Bügelarm 40, die über eine Halterung an der Unterseite des zweiten Bereichs des Klemmarms 14 drehbar angebracht sind. Der erste Bügelarm 36 stützt sich mit seinem innenseitigen Ende an der Unterseite des zweiten Bereichs des Klemmarms 14 ab und weist an seinem äußeren Ende einen Auflagebereich 38 auf, der in Richtung des zweiten Bereichs des Klemmarms 14 verläuft. Der zweite Bügelarm 40 weist ebenfalls einen Auflagebereich 38 auf und ist drehbar mit dem ersten Bügelarm 36 über die Halterung verbunden.

Zwischen dem ersten Bügelarm 36 und dem zweiten Bügelarm 40 ist ein Hydraulikzylinder 42 derart angeordnet, dass er den ersten und den zweiten Bügel zueinander beabstandet.

Die Kippvorrichtung 10 weist ferner eine Verriegelungseinrichtung 25 auf, die beispielsweise an dem Gegengewicht 18 angebracht ist eine relative Bewegung des Kipprahmens zu dem Klemmarm 14 verhindert. Bei einer solchen Verriegelung kann es sich beispielsweise um einen Bolzen oder eine Einrastverbindung handeln, die beispielsweise automatisch ab Erreichen eines bestimmten Drehwinkels des Kipprahmens 12 zu dem Klemmarm 14 verriegelbar bzw. lösbar ist. Die Verriegelung kann ferner derart ausgebildet sein, dass sie eine relative Drehung des Klemmrahmens zu dem Klemmarm nur in eine Richtung verhindert, sodass beispielsweise eine Drehung entgegen der Klemmrichtung verhindert wird.

Fig. 2 zeigt eine Kippvorrichtung 10 mit einem Wagon 22 gemäß Fig. 1, wobei sich die Kippvorrichtung im Unterschied zur Fig. 1 in einer Kippposition befinden, in der der Kipprahmen 12 relativ zu dem Klemmarm 12 um einen um die Drehachse D gedreht ist. Der Klemmarm 14 ist aufgrund des an dem unteren Bereich des Klemmarms 14 angebrachten Gegengewichts 18 senkrecht ausgerichtet.

Die drehfest an dem Kipprahmen 12 angebrachte Plattform 16 ist mit dem Kipprahmen 12 um die Drehachse D gedreht, sodass die Oberfläche der Plattform 16, auf der der Wagon 22 angeordnet ist, schräg zur Horizontalen verläuft und der Wagon mit seiner zur Kippvorrichtung 10 gewandten Seitenwand an der Stützwand 20 anliegt.

Durch die Drehbewegung des Kipprahmens 12 relativ zu dem Klemmarm 14 verringert sich der Abstand zwischen dem an dem Klemmarm 14 angebrachten Bügel 34 und der an dem Kipprahmen 12 angebrachten Plattform 16, sodass in der in Fig. 2 dargestellten Kippposition, die Auflagebereiche 38 des ersten und des zweiten Bügelarms 36, 40 auf den Oberkanten der Seitenwände des Wagons 22 anliegen. Der Wagon wird in der Kippposition zwischen den Bügel 34 und der Plattform 16 geklemmt, sodass die Wagonfedern 32 zumindest mit einer Kraft in Richtung der Plattform 16 beaufschlagt werden.

Die in Fig. 2 dargestellte Kippposition zeigt die Position, in welcher die Verriegelungseinrichtung 25 einrastet und eine weitere relative Drehung des Kipprahmens 12 relativ zu dem Klemmarm 14 verhindert.

Fig. 3 zeigt die Kippvorrichtung 10 gemäß den Figuren 1 und 2 in einer weiteren Kippposition, in der der Kipprahmen 12 um einen maximalen Drehwinkel um die Drehachse D gedreht ist, sodass der Wagon 22 entleert wird. In dieser Position wirkt die maximale Kraft über den Bügel 34 auf den Klemmarm 14. Die Figuren 1 bis 3 stellen eine Drehbewegung des Kipprahmens 12 in Kipprichtung dar.

Zur Durchführung eines Kippvorgangs wird der Kipprahmen 12 von der in Fig. 1 dargestellten Ausgangsposition in Kipprichtung gedreht bis die Fig. 3 dargestellte Endposition erreicht ist. Zwischen der Ausgangsstellung in Fig. 1 und der Endposition in Fig. 3 wird die in Fig. 2 dargestellte Kippposition erreicht, bei welcher die Verriegelungseinrichtung 25 arretiert, sodass eine Relativbewegung zwischen dem Kipprahmen 12 und dem Klemmarm 14 verhindert wird. Nach Erreichen der Endposition gemäß Fig. 3 wird der Kipprahmen 12 entgegen der Kipprichtung gedreht, sodass die in Fig. 2 dargestellte Kippposition erreicht wird, in der der Klemmarm im Wesentlichen senkrecht ausgerichtet ist. In dieser Kippposition wird bei einer Drehung des Kipprahmens 12 entgegen der Kipprichtung die Verriegelung zwischen dem Kipprahmen 12 und dem Klemmarm 14 gelöst, sodass eine Relativbewegung zwischen diesen möglich ist. Anschließend wird der Kipprahmen 12 in die Ausgangsposition gemäß Fig. 1 gedreht, sodass der entleerte Wagon die Kippvorrichtung 10 verlassen kann.

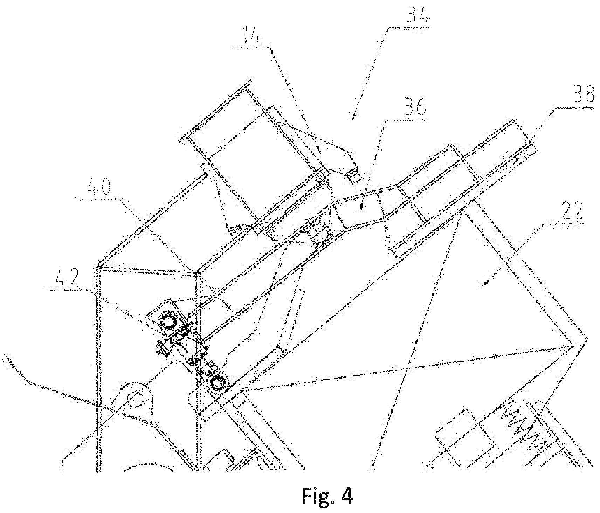

In Fig. 4 ist ein vergrößerter Ausschnitt der Kippvorrichtung 10 in der Kippposition gemäß Fig. 2 gezeigt. Insbesondere zeigt Fig. 4 den Bügel 34, wobei der Hydraulikzylinder 42 mit seinem ersten, oberen Ende an dem sich an den Klemmarm 14 abstützenden Bereich des ersten Bügelarms 36 und mit seinem zweiten, unteren Ende an dem Auflagebereich 38 des zweiten Bügelarms 40 angebracht ist. Es ist ebenfalls denkbar, den Hydraulikzylinder beispielsweise zwischen dem zweiten Bügelarm 40 und dem Klemmarm 14 anzubringen.

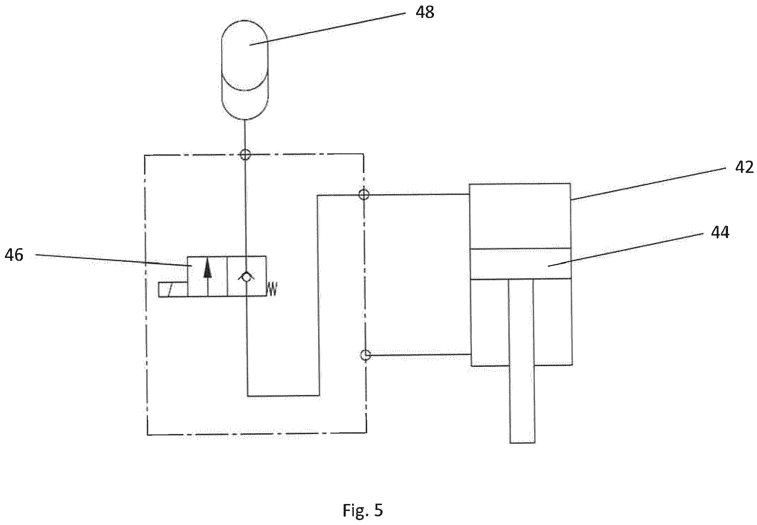

In der in Fig. 1 dargestellten Ausgangsposition ist der Wagon 22 beispielsweise mit Schüttgut gefüllt, wobei die Gewichtskraft des Schüttguts in dem Wagon 22 die Wagonfedern 32 mit einer Kraft beaufschlagt. Nach dem Entleeren des Wagons 22 ist der Wagon um das Gewicht des Schüttguts erleichtert und die auf die Wagonfedern 32 wirkende Kraft ist geringer, sodass die Wagonfedern 32 den Bügel 34 mit einer Kraft beaufschlagen. Diese aus der Differenz des Wagongewichts vor und nach dem Entleeren resultierende Kraft wird über den Bügel 34 in den Klemmarm 14 geleitet und bewirkt eine Verspannung der Verriegelungseinrichtung 25 zwischen dem Klemmarm 14 und dem Kipprahmen 12, sodass ein Lösen der Verriegelung schwierig ist. Die Anordnung des Hydraulikzylinders 42 verhindert eine solche Verspannung der Verriegelungseinrichtung 25, wie nachfolgend mit Bezug auf Fig. 5 beschrieben.

Fig. 5 zeigt eine schematische Darstellung einer Hydraulikschaltung des Hydraulikzylinders 42 der Fig. 1 - 4. In dem Hydraulikzylinder ist ein Kolben 44 angeordnet, der sich in Fig. 5 in etwa auf der Mitte des Hydraulikzylinders befindet und den Hydraulikzylinder in zwei Kammern teilt. Der Hydraulikzylinder ist über ein Magnetstellventil 46 mit einem Druckspeicher 48 verbunden, wobei das Magnetstellventil ein zwei-Wegeventil ist mit einem Rückschlagventil, das eine geschlossene Ventilstellung realisiert, und einem Durchlass, der eine geöffnete Ventilstellung realisiert. In der in Fig. 5 dargestellten geschlossenen Stellung des Magnetstellventils 46 wird ein Hydraulikstrom von dem Hydraulikzylinder zu dem Druckspeicher über das Rückschlagventil verhindert.

Die in Fig. 5 gezeigte Stellung des Magnetstellventils 46 entspricht der Stellung in den Kipppositionen der Figuren 1 bis 3, in denen der Kippvorgang von der Ausgangsposition in Fig. 1 bis zur Endposition in Fig. 3 dargestellt ist.

Während des Kippvorgangs, bei der Drehung des Kipprahmens 12 in Kipprichtung, befindet sich das Magnetstellventil 46 in der in Fig. 5 dargestellten Stellung. Während der Drehung des Kipprahmens 12 entgegen der Kipprichtung schaltete das Magnetstellventil 46 bei Erreichen eines bestimmten Drehwinkels des Kipprahmens 12 von der geschlossenen Stellung in die geöffnete Stellung. Der Drehwinkel, bei dem das Magnetstellventil den Hydraulikstrom zwischen dem Hydraulikzylinder 42 und dem Druckspeicher 48 freigibt umfasst einen Bereich von etwa 40° bis 90 °, insbesondere etwa 50° bis 70°. Vorzugsweise wird das Magnetstellventil 46 vor dem Lösen der Verriegelung von der geschlossenen in die geöffnete Stellung bewegt.

Im der geöffneten Position des Magnetstellventils strömt Hydraulikflüssigkeit von dem Hydraulikzylinder 42 zu dem Druckspeicher 48, wobei sich der Kolben 44 aufgrund der auf den Kolben 44 wirkenden Kraft der Wagonfedern 32 in den Hydraulikzylinder 42 bewegt bis er das Ende des Hydraulikzylinders 42 erreicht hat oder eine Kompensation der aus der Differenz des Wagongewichts vor und nach dem Entleeren resultierenden Kraft erreicht wurde. Das Öffnen des Magnetstellventils 46 bewirkt zumindest einen teilweisen Ausgleich der Kräfte innerhalb der Kippvorrichtung 10, wobei eine Verspannung der Verriegelungseinrichtung 25 vermieden wird.

Während des weiteren Kippvorgangs entgegen der Kipprichtung wird das Magnetstellventil 46 wieder in die geschlossenen Position bewegt, wobei der Kolben 44 aufgrund der auf ihn wirkenden resultierenden Kräfte in der eingefahrenen Position verbleibt. Das Magnetstellventil 46 wird insbesondere vor Entriegelung der Verriegelungseinrichtung 25 zurück in die geschlossenen Position bewegt. Beim Erreichen der in Fig. 2 dargestellten Kippposition wird die Verriegelungseinrichtung 25 geöffnet und beim Überschreiten der in Fig. 2 dargestellten Position wird der Bügel 34 von dem Wagon 22 abgehoben. In der geschlossenen Stellung des Magnetstellventils 46 ist zwischen dem Hydraulikzylinder 42 und dem Druckspeicher 48 ein Rückschlagventil angeordnet, sodass ein Hydraulikstrom von dem Druckspeicher 48 zu dem Hydraulikzylinder 42 möglich ist. Vor dem Erreichen der in Fig. 1 dargestellten Ausgangsposition wird die in Fig. 5 dargestellte Stellung des Kolbens 44 in dem Hydraulikzylinder wieder erreicht.

Die voran beschriebene Anordnung ermöglicht einen Ausgleich der durch die Entleerung des Wagons auftretenden Kräfte, wobei Verspannungen innerhalb der Kippvorrichtung zuverlässig vermieden werden und ein hoher Verschleiß oder Bruch der Verriegelungseinrichtung 25 verhindert wird.

### Bezugszeichenliste

- 10: Kippvorrichtung
- 12: Kipprahmen
- 14: Klemmarm
- 16: Plattform
- 18: Gegengewicht
- 20: Stützwand
- 22: Wagon
- 24: Antriebsring
- 25: Verriegelungseinrichtung
- 26: Antriebseinrichtung
- 28: Schienen
- 30: Fahrwerk
- 32: Wagonfeder
- 34: Bügel
- 36: erster Bügelarm
- 38: Auflagebereich
- 40: zweiter Bügelarm
- 42: Hydraulikzylinder
- 44: Kolben
- 46: Magnetstellventil
- 48: Druckspeicher

## Patentansprüche

1. Kippvorrichtung (10) zum Entleeren von Materialien, vorzugsweise Schüttgut, aus Wagons (22) aufweisend
einen Kipprahmen (12), der um eine Drehachse (D) drehbar ist,
eine mit dem Kipprahmen (12) verbundene Plattform (16) zur Aufnahme zumindest eines Wagons (22),
einen an dem Kipprahmen (12) drehbar angebrachten Klemmarm (14),
eine Verriegelungseinrichtung (25) zum Verhindern einer relativen Bewegung zwischen dem Kipprahmen (12) und dem Klemmarm (14), wobei die Verriegelungseinrichtung (25) einen Bolzen oder eine Einrastverbindung bildet, und
einen Bügel (34), der derart an dem Klemmarm (14) angebracht ist, dass er in einer Kippposition der Kippvorrichtung (10), bei welcher der Kipprahmen (12) um die Drehachse gedreht ist, zumindest teilweise auf einer oberen Kante zumindest einer Seitenwand des Wagons (22) anliegt,
**dadurch gekennzeichnet, dass**
an dem Bügel (34) ein Hydraulikzylinder (42) derart angebracht ist, dass er während eines Kippvorgangs auftretende Verspannungen der Kippvorrichtung (10), insbesondere in der Verriegelungseinrichtung (25), zumindest teilweise kompensiert,
wobei der Hydraulikzylinder (42) zwischen dem Bügel (34) und dem Klemmarm (14) angeordnet ist.

2. Kippvorrichtung (10) nach Anspruch 1, wobei der Bügel (34) einen ersten Bügelarm (36) und einen relativ zu dem ersten Bügelarm (36) drehbaren zweiten Bügelarm (40) aufweist und wobei der Hydraulikzylinder (42) zwischen dem ersten Bügelarm (36) und dem zweiten Bügelarm (40) angeordnet ist.

3. Kippvorrichtung (10) nach einem der vorangehenden Ansprüche, wobei der Hydraulikzylinder (42) derart an dem Bügel (34) angebracht ist, dass er den Bügel (34) in der Kippposition der Kippvorrichtung (10) mit einer Kraft in Richtung der Plattform (16) beaufschlagt.

4. Kippvorrichtung (10) nach einem der vorangehenden Ansprüche, wobei ein hydraulischer Druckspeicher (48) angeordnet ist, der mit dem Hydraulikzylinder (42) in Verbindung steht.

5. Kippvorrichtung (10) nach Anspruch 4, wobei zwischen dem Hydraulikzylinder (42) und dem Druckspeicher (42) ein Ventil (46), insbesondere ein Magnetstellventil angeordnet ist.

6. Kippvorrichtung (10) nach Anspruch 5, wobei das Ventil (46) eine geöffnete Position, in der Hydraulikflüssigkeit von dem Hydraulikzylinder (42) in den Druckspeicher (48) strömen kann, und eine geschlossene Position umfasst, in der ein Rückschlagventil ein Strömen von Hydraulikflüssigkeit von dem Hydraulikzylinder (42) in den Druckspeicher (48) verhindert.

7. Kippvorrichtung (10) nach einem der vorangehenden Ansprüche, wobei der Wagon (22) ein Fahrgestell (30) und eine Wagonfeder (32) aufweist, wobei der Hydraulikzylinder (42) zur Wirkung gegen die Wagonfeder (32) angeordnet ist.

8. Verfahren zum Betreiben einer Kippvorrichtung (10) nach einem der vorrangehenden Ansprüche, wobei die Kippvorrichtung (10) einen hydraulischen Druckspeicher (48) aufweist ist, der mit dem Hydraulikzylinder (42) in Verbindung steht, umfassend die Schritte:
a) Drehen des Kipprahmens (12) in Kipprichtung um die Drehachse (D),
b) Aktivieren der Verriegelungseinrichtung (25), sodass eine relative Bewegung zwischen dem Kipprahmen (12) und dem Klemmarm (14) verhindert wird,
c) Drehen des Kipprahmens (12) in Kipprichtung um die Drehachse (D) um einen Winkel von etwa 130° - 180°,
d) Drehen des Kipprahmens (12) entgegen der Kipprichtung um die Drehachse (D),
e) Strömen von Hydraulikflüssigkeit von dem Hydraulikzylinder (42) in den Druckspeicher (48),
f) Lösen der Verriegelungseinrichtung (25), sodass eine relative Bewegung zwischen dem Kipprahmen (12) und dem Klemmarm (14) ermöglicht wird.

9. Verfahren nach Anspruch 8, wobei die Kippvorrichtung (10) ein Ventil (46) aufweist, das eine geöffnete Position, in der Hydraulikflüssigkeit von dem Hydraulikzylinder (42) in den Druckspeicher (48) strömen kann, und eine geschlossene Position umfasst, in der ein Rückschlagventil ein Strömen von Hydraulikflüssigkeit von dem Hydraulikzylinder (42) in den Druckspeicher (48) verhindert und wobei der Schritt e) das Bewegen des Ventils (46) in die geöffnete Position umfasst.

10. Verfahren nach Anspruch 8 oder 9, wobei zwischen dem Schritt e) und f) das Ventil (46) in die geschlossene Position bewegt wird.

11. Verfahren nach einem der Ansprüche 8 bis 10, wobei während der Schritte a) bis d) das Ventil (46) in der geschlossenen Position ist.

## Claims

1. A tilting apparatus (10) for emptying materials, preferably bulk material, out of railcars (22), having
a tilting frame (12) which is rotatable about an axis of rotation (D),
a platform (16), connected to the tilting frame (12), for receiving at least one railcar (22),
a clamping arm (14) attached to the tilting frame (12) in a rotatable manner,
a locking device (25) for preventing a relative movement between the tilting frame (12) and the clamping arm (14), the locking device (25) forming a pin or a latching connection and
a bracket (34) which is attached to the clamping arm (14) such that, in a tilted position of the tilting apparatus (10), in which the tilting frame (12) has been rotated about the axis of rotation, it lies at least partially against an upper edge of at least one side wall of the railcar (22),
**characterized in that** a hydraulic cylinder (42) is attached to the bracket (34) such that it at least partially compensates for tensions in the tilting apparatus (10), in particular in the locking device (25), that arise during a tilting operation, wherein the hydraulic cylinder (42) is arranged between the bracket (34) and the clamping arm (14).

2. The tilting apparatus (10) as claimed in claim 1, wherein the bracket (34) comprises a first bracket arm (36) and a second bracket arm (40) that is rotatable relative to the first bracket arm (36), and wherein the hydraulic cylinder (42) is arranged between the first bracket arm (36) and the second bracket arm (40).

3. The tilting apparatus (10) as claimed in one of the preceding claims, wherein the hydraulic cylinder (42) is attached to the bracket (34) such that it subjects the bracket (34) to a force in the direction of the platform (16) in the tilted position of the tilting apparatus (10).

4. The tilting apparatus (10) as claimed in one of the preceding claims, wherein a hydraulic accumulator (48) is arranged, which is connected to the hydraulic cylinder (42).

5. The tilting apparatus (10) as claimed in claim 5, wherein a valve (46), in particular a magnetic control valve, is arranged between the hydraulic cylinder (42) and the accumulator (42).

6. The tilting apparatus (10) as claimed in claim 5, wherein the valve (46) comprises an open position, in which hydraulic fluid can flow from the hydraulic cylinder (42) into the accumulator (48), and a closed position, in which a nonreturn valve prevents hydraulic fluid from flowing from the hydraulic cylinder (42) into the accumulator (48).

7. The tilting apparatus (10) as claimed in one of the preceding claims, wherein the railcar (22) comprises a truck (30) and a railcar spring (32), whereinthe hydraulic cylinder (42) is arranged to counteract the railcar spring (32).

8. A method for operating a tilting apparatus (10) as claimed in one of the preceding claims, wherein the tilting apparatus (10) comprises is a hydraulic accumulator (48) which is connected to the hydraulic cylinder (42), comprising the steps of:
a) rotating the tilting frame (12) in the tilting direction about the axis of rotation (D),
b) activating the locking device (25) such that a relative movement between the tilting frame (12) and the clamping arm (14) is prevented,
c) rotating the tilting frame (12) in the tilting direction through an angle of about 130° - 180° about the axis of rotation (D),
d) rotating the tilting frame (12) counter to the tilting direction about the axis of rotation (D),
e) causing hydraulic fluid to flow from the hydraulic cylinder (42) into the accumulator (48),
f) releasing the locking device (25) so as to allow a relative movement between the tilting frame (12) and the clamping arm (14).

9. The method as claimed in claim 8, wherein the tilting apparatus (10) comprises a valve (46) which comprises an open position, in which hydraulic fluid can flow from the hydraulic cylinder (42) into the accumulator (48), and a closed position, in which a nonreturn valve prevents hydraulic fluid from flowing from the hydraulic cylinder (42) into the accumulator (48), and wherein step e) comprises moving the valve (46) into the open position.

10. The method as claimed in claim 8 or 9, wherein, between steps e) and f), the valve (46) is moved into the closed position.

11. The method as claimed in one of claims 8 to 10, wherein, during steps a) to d), the valve (46) is in the closed position.

## Revendications

1. Dispositif de basculement (10) permettant de vider des matériaux, de préférence de la matière en vrac, à partir de wagons (22), présentant
un cadre basculant (12) pouvant tourner autour d'un axe de rotation (D),
une plate-forme (16) reliée au cadre basculant (12) pour recevoir au moins un wagon (22),
un bras de serrage (14) monté rotatif sur le cadre basculant (12),
un dispositif de verrouillage (25) permettant d'empêcher un mouvement relatif entre le cadre basculant (12) et le bras de serrage (14), le dispositif de verrouillage (25) formant un axe ou une liaison par enclenchement, et
une attache (34) qui est montée sur le bras de serrage (14) de telle sorte qu'elle repose au moins partiellement sur un bord supérieur d'au moins une paroi latérale du wagon (22) dans une position de basculement du dispositif de basculement (10) dans laquelle le cadre basculant (12) tourne autour de l'axe de rotation,
**caractérisé en ce qu'**un vérin hydraulique (42) est monté sur l'attache (34) de façon à compenser au moins partiellement des déformations du dispositif de basculement (10) apparaissant pendant un processus de basculement, en particulier dans le dispositif de verrouillage (25), le vérin hydraulique (42) étant disposé entre l'attache (34) et le bras de serrage (14) .

2. Dispositif de basculement (10) selon la revendication 1, dans lequel l'attache (34) présente un premier bras d'attache (36) et un deuxième bras d'attache (40) rotatif par rapport au premier bras d'attache (36), et le vérin hydraulique (42) étant disposé entre le premier bras d'attache (36) et le deuxième bras d'attache (40).

3. Dispositif de basculement (10) selon l'une quelconque des revendications précédentes, dans lequel le vérin hydraulique (42) est monté sur l'attache (34) de telle sorte qu'il soumet l'attache (34) dans la position de basculement du dispositif de basculement (10) à une force en direction de la plate-forme (16).

4. Dispositif de basculement (10) selon l'une quelconque des revendications précédentes, dans lequel un accumulateur de pression hydraulique (48) est disposé qui est en communication avec le vérin hydraulique (42).

5. Dispositif de basculement (10) selon la revendication 4, dans lequel une vanne (46), en particulier une électrovanne de commande, est disposée entre le vérin hydraulique (42) et l'accumulateur de pression (42).

6. Dispositif de basculement (10) selon la revendication 5, dans lequel la vanne (46) comprend une position ouverte dans laquelle le liquide hydraulique peut s'écouler du vérin hydraulique (42) dans l'accumulateur de pression (48), et une position fermée dans laquelle un clapet antiretour empêche un écoulement de liquide hydraulique du vérin hydraulique (42) dans l'accumulateur de pression (48).

7. Dispositif de basculement (10) selon l'une quelconque des revendications précédentes, dans lequel le wagon (22) présente un châssis (30) et un ressort de wagon (32), le vérin hydraulique (42) étant agencé pour agir contre le ressort de wagon (32).

8. Procédé d'exploitation d'un dispositif de basculement (10) selon l'une quelconque des revendications précédentes, dans lequel le dispositif de basculement (10) présente un accumulateur de pression hydraulique (48) qui est en communication avec le vérin hydraulique (42), comprenant les étapes consistant à :
a) faire tourner le cadre basculant (12) dans la direction de basculement autour de l'axe de rotation (D),
b) activer le dispositif de verrouillage (25) de façon à empêcher un mouvement relatif entre le cadre basculant (12) et le bras de serrage (14),
c) faire tourner le cadre basculant (12) dans la direction de basculement autour de l'axe de rotation (D) sur un angle d'environ 130° à 180°,
d) faire tourner le cadre basculant (12) à l'opposé de la direction de basculement autour de l'axe de rotation (D),
e) faire couler du liquide hydraulique du vérin hydraulique (42) dans l'accumulateur de pression (48),
f) libérer le dispositif de verrouillage (25) de façon à permettre un mouvement relatif entre le cadre basculant (12) et le bras de serrage (14).

9. Procédé selon la revendication 8, dans lequel le dispositif de basculement (10) présente une vanne (46) qui comprend une position ouverte dans laquelle le liquide hydraulique peut s'écouler du vérin hydraulique (42) dans l'accumulateur de pression (48), et une position fermée dans laquelle un clapet antiretour empêche un écoulement de liquide hydraulique du vérin hydraulique (42) dans l'accumulateur de pression (48), et dans lequel l'étape e) comprend le déplacement de la vanne (46) dans la position ouverte.

10. Procédé selon la revendication 8 ou 9, dans lequel la vanne (46) est déplacée dans la position fermée entre les étapes e) et f).

11. Procédé selon l'une quelconque des revendications 8 à 10, dans lequel la vanne (46) se trouve dans la position fermée pendant les étapes a) à d).
